(19) **Europäisches Patentamt / European Patent Office / Office européen des brevets**

(11) **EP 4 653 848 A1**

(12) # EUROPEAN PATENT APPLICATION
published in accordance with Art. 153(4) EPC

(43) Date of publication:
26.11.2025 Bulletin 2025/48

(21) Application number: 23924259.7

(22) Date of filing: 26.12.2023

(51) International Patent Classification (IPC):
*G01N 21/64* (2006.01)    *G06T 7/00* (2017.01)
*G06T 7/174* (2017.01)

(52) Cooperative Patent Classification (CPC):
G01N 21/64; G06T 7/00; G06T 7/174

(86) International application number:
PCT/JP2023/046652

(87) International publication number:
WO 2024/176615 (29.08.2024 Gazette 2024/35)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 24.02.2023 JP 2023027522

(71) Applicant: Hamamatsu Photonics K.K.
Hamamatsu-shi, Shizuoka 435-8558 (JP)

(72) Inventors:
• HIGUCHI Takafumi
  Hamamatsu-shi, Shizuoka 435-8558 (JP)
• IKEMURA Kenichiro
  Hamamatsu-shi, Shizuoka 435-8558 (JP)
• KAMO Wataru
  Hamamatsu-shi, Shizuoka 435-8558 (JP)
• KATO Natsumi
  Hamamatsu-shi, Shizuoka 435-8558 (JP)

(74) Representative: Hoffmann Eitle
Patent- und Rechtsanwälte PartmbB
Arabellastraße 30
81925 München (DE)

(54) **SEPARATED IMAGE ACQUISITION METHOD, SEPARATED IMAGE ACQUISITION DEVICE, AND SEPARATED IMAGE ACQUISITION PROGRAM**

(57) A fluorescent dye image acquisition system 1 includes an excitation light source 7 that irradiates a sample S with each of excitation light beams of a plurality of wavelength distributions; a camera 15 that acquires, for a plurality of types of fluorescence generated from the sample S by each of the excitation light beams of the plurality of wavelengths, target fluorescence images in a plurality of optical states having different wavelength characteristics through a camera-side filter set 9b; and an image processing device 5. The image processing device 5 stores a plurality of mixing matrices for obtaining fluorescent dye images of separated types of fluorescence, and generates a fluorescent dye image, for each of the plurality of types of fluorescence, based on the target fluorescence image that has been acquired in one optical state by the camera 15 and a selected mixing matrix.

*Fig.1*

EP 4 653 848 A1

## Description

### Technical Field

One aspect of an embodiment relates to a separated image acquisition method, a separated image acquisition device, and a separated image acquisition program.

### Background Art

Conventionally, a multiple staining method of simultaneously staining a plurality of substances in a sample for a sample such as a biological tissue has been used. Then, in order to observe the substances in the sample subjected to multiple staining, a fluorescence image is also acquired by irradiating the sample with excitation light. For example, Non Patent Literature 1 below discloses application of a nonnegative matrix factorization (NMF) method in order to obtain a separated image for each substance in a sample by performing blind unmixing of fluorescence images obtained by observing fluorescence in a plurality of wavelength ranges. In addition, Non Patent Literature 2 below discloses, as a method of unmixing fluorescence images, clustering fluorescence images, extracting a maximum value of fluorescence intensity in each clustered pixel group, and generating a separated image based on the maximum value.

### Citation List

### Non Patent Literature

Non Patent Literature 1: Binjie Qin et al., "Target/Background Classification Regularized Nonnegative Matrix Factorization for Fluorescence Unmixing", IEEE TRANSACTIONS ON INSTRUMENTATION AND MEASUREMENT, VOL.65, NO.4, APRIL 2016

Non Patent Literature 2: Tristan D. McRae et al., "Robust blind spectral unmixing for fluorescence microscopy using unsupervised learning", PLOS ONE, December 2,2019

### Summary of Invention

### Technical Problem

In the conventional method as described above, a calculation time of unmixing increases according to a type of excitation light, the number of fluorescent dyes to be observed, or the like, and throughput tends to decrease.
Therefore, one aspect of the embodiment has been made in view of such a problem, and an object thereof is to provide a separated image acquisition method, a separated image acquisition device, and a separated image acquisition program capable of improving throughput at the time of acquiring a separated image by unmixing.

### Solution to Problem

A separated image acquisition method according to a first aspect of the embodiment includes: a selection step of selecting desired image separation information from a storage unit that stores a plurality of pieces of image separation information for obtaining a fluorescence separation image obtained by separating a fluorescence image, the image separation information being acquired based on a plurality of reference fluorescence images in a plurality of optical states having different wavelength characteristics; an irradiation step of irradiating a sample with each of excitation light beams of a plurality of wavelengths; an acquisition step of acquiring, for each of a plurality of types of fluorescence generated from the sample by each of the excitation light beams of the plurality of wavelengths, a target fluorescence image in at least one optical state among the plurality of optical states through a fluorescence filter unit having a plurality of reflection wavelength ranges and a plurality of transmission wavelength ranges; and a generation step of generating, for each of the plurality of types of fluorescence, the fluorescence separation image based on the target fluorescence image acquired in the acquisition step and the image separation information selected in the selection step.
Alternatively, a separated image acquisition device according to a second aspect of the embodiment includes: a storage unit configured to store image separation information for obtaining a fluorescence separation image obtained by separating a fluorescence image, the image separation information being acquired based on a plurality of reference fluorescence images in a plurality of optical states having different wavelength characteristics; an irradiation device configured to irradiate a sample with each of excitation light beams of a plurality of wavelength distributions; an image acquisition device configured to acquire, for each of a plurality of types of fluorescence generated from the sample by each of the excitation light beams of a plurality of wavelengths, a target fluorescence image in at least one optical state among the plurality of optical states through a fluorescence filter unit having a plurality of reflection wavelength ranges and a plurality of transmission wavelength ranges; and an image processing device configured to process the fluorescence image, in which the image processing device selects desired image separation information from among a plurality of pieces of the image separation information stored in the storage unit, and generates, for each of the plurality of types of fluorescence, the fluorescence separation image based on the target fluorescence image acquired in the image acquisition device and the selected image separation information.

Alternatively, a separated image acquisition program according to a third aspect of the embodiment is a separated image acquisition program for generating a fluorescence separation image based on a plurality of reference fluorescence images in a plurality of optical states having different wavelength characteristics, acquired through a fluorescence filter unit having a plurality of reflection wavelength ranges and a plurality of transmission wavelength ranges, for each of a plurality of types of fluorescence generated from a sample by each of excitation light beams of a plurality of wavelengths by irradiating the sample with each of the excitation light beams of a plurality of wavelength distributions, the separated image acquisition program causing a computer to execute a process including: storage processing of storing a plurality of pieces of image separation information for obtaining the fluorescence separation images of separated types of fluorescence, the image separation information being acquired based on the plurality of reference fluorescence images; selection processing of selecting desired image separation information from among the plurality of pieces of stored image separation information; and generation processing of generating, for each of the plurality of types of fluorescence, the fluorescence separation image based on a target fluorescence image acquired in at least one optical state among the plurality of optical states and the selected image separation information.

According to the first aspect, the second aspect, or the third aspect, desired image separation information is selected from a plurality of pieces of image separation information acquired based on a plurality of reference fluorescence images, a target fluorescence image obtained by capturing a fluorescence image of a sample in the same optical state as any of the optical states of the plurality of reference fluorescence images through the fluorescence filter unit by using excitation light beams of different wavelength distributions is acquired, and a fluorescence separation image is generated by using the acquired target fluorescence image and the selected image separation information. As a result, even when the type of excitation light used for observation or the number of fluorescent dyes to be observed is large, unmixing can be performed by utilizing image separation information acquired in the past, and a calculation amount of unmixing can be suppressed. As a result, it is possible to improve throughput at the time of acquiring a separated image by unmixing.

## Advantageous Effects of Invention

According to one aspect of the present invention, it is possible to improve throughput at the time of acquiring a separated image by unmixing.

## Brief Description of Drawings

FIG. 1 is a schematic configuration diagram of a fluorescent dye image acquisition system 1 according to an embodiment.
FIG. 2 is a perspective diagram illustrating a configuration of an image acquisition device 3 in FIG. 1.
FIG. 3 is a block diagram illustrating an example of a hardware configuration of an image processing device 5 in FIG. 1.
FIG. 4 is a block diagram illustrating a functional configuration of the image processing device 5 in FIG. 1.
FIG. 5 is a diagram illustrating an image of pixel groups clustered by a first clustering function by a matrix acquisition unit 203 in FIG. 4.
FIG. 6 is a graph illustrating wavelength characteristics of absorption rates of excitation light beams of a plurality of fluorescent dyes included in a sample S.
FIG. 7 is a graph illustrating a distribution of centroid fluorescence wavelengths specified by the matrix acquisition unit 203 in FIG. 4.
FIG. 8 is a diagram illustrating an image of pixel groups clustered by a second clustering function by the matrix acquisition unit 203 in FIG. 4.
FIG. 9 is a diagram illustrating an image of matrix data Y' regenerated by the matrix acquisition unit 203 in FIG. 4 and fluorescent dye matrix data X'.
FIG. 10 is a flowchart illustrating a procedure of a separated image acquisition method according to the embodiment.
FIG. 11 is a diagram illustrating an example of fluorescent dye images generated based on a target fluorescence image by the fluorescent dye image acquisition system 1 according to the present embodiment.

FIG. 12 is a diagram illustrating an example of fluorescent dye images generated based on a target fluorescence image without correcting a mixing matrix by the fluorescent dye image acquisition system 1 according to the present embodiment.

FIG. 13 is a block diagram illustrating a functional configuration of an image processing device 5A according to a modification.

**Description of Embodiments**

Hereinafter, an embodiment of the present invention will be described in detail with reference to the accompanying drawings. Note that, in the description, the same reference numerals will be used for the same elements or elements having the same functions, and redundant description will be omitted.

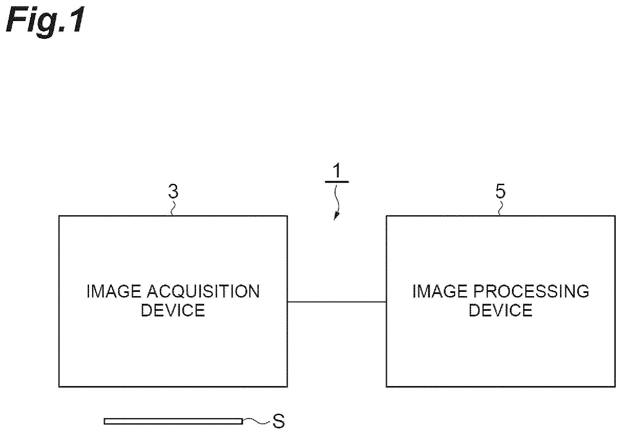

FIG. 1 is a schematic configuration diagram of a fluorescent dye image acquisition system 1 that is a separated image acquisition device according to an embodiment. The fluorescent dye image acquisition system 1 is a device for generating a fluorescent dye image (fluorescence separation image) for specifying a distribution of fluorescent dyes in a sample such as a biological tissue to be observed. The image generated by the fluorescent dye image acquisition system 1 is used for the purpose of drug development, therapy study, and the like through analysis of the image. Therefore, the fluorescent dye image acquisition system 1 is required to generate an image capable of quantitatively specifying the distribution of many substances (fluorescent dyes) contained in the sample with high throughput. The fluorescent dye image acquisition system 1 includes an image acquisition device 3 that irradiates a sample S with excitation light and acquires an image of fluorescence generated in response to the irradiation, and an image processing device 5 that performs data processing on the image acquired by the image acquisition device 3. The image acquisition device 3 and the image processing device 5 may be configured to be able to transmit and receive image data by using wired communication or wireless communication therebetween, or may be configured to be able to input and output image data via a recording medium.

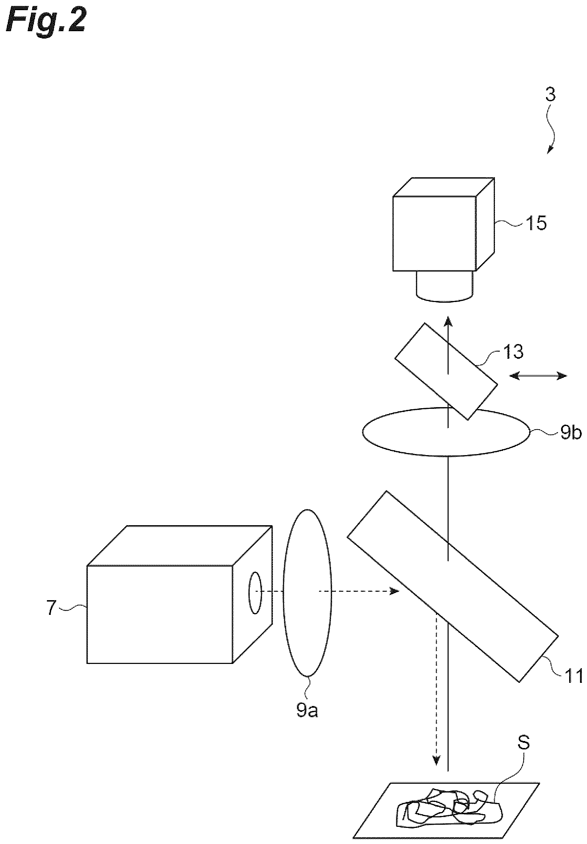

FIG. 2 is a perspective diagram illustrating a configuration of the image acquisition device 3 of FIG. 1. In FIG. 2, an optical path of the excitation light is indicated by a dotted line with an arrow, and an optical path of the fluorescence is indicated by a solid line with an arrow. The image acquisition device 3 includes an excitation light source (irradiation device) 7, a light source-side filter set 9a, a dichroic mirror 11, a camera-side filter set (fluorescence filter unit) 9b, a wavelength information acquisition optical system (optical filter) 13, and a camera (image acquisition device) 15.

The excitation light source 7 is a light source capable of emitting excitation light beams of a plurality of wavelength bands (wavelength distributions) by switching, and is, for example, a light emitting diode (LED) light source, a light source including a plurality of monochromatic laser light sources, or a light source combining a white light source and a wavelength selection optical element. The light source-side filter set 9a is a multiband pass filter provided on the optical path of excitation light of the excitation light source 7 and having a property of transmitting light beams of a plurality of predetermined wavelength bands. The transmission wavelength bands of the light source-side filter set 9a are set according to a plurality of wavelength bands of excitation light that can be used. The dichroic mirror **11** is an optical member that is provided between the light source-side filter set 9a and the sample S and has a property of reflecting excitation light toward the sample S and transmitting fluorescence emitted from the sample S in response to the reflection. The camera-side filter set 9b is a multiband pass filter that is provided on the optical path of the fluorescence transmitted by the dichroic mirror **11** and has a property of transmitting light beams of a plurality of predetermined wavelength bands. The transmission wavelength band of the camera-side filter set 9b is set according to the wavelength band of fluorescence generated in a fluorescent dye that can be included in the sample S to be observed. Specifically, the camera-side filter set 9b has, as its wavelength characteristics, transmission wavelength bands (transmission wavelength ranges) corresponding to the wavelength bands of the plurality of types of fluorescence, and reflection wavelength bands (reflection wavelength ranges) between the plurality of transmission wavelength bands.

The wavelength information acquisition optical system 13 is an optical system that is detachably supported on the optical path of the fluorescence transmitted by the camera-side filter set 9b and acquires wavelength information of the fluorescence. That is, the wavelength information acquisition optical system 13 is provided to be switchable between two states of a state (first optical state) in which the wavelength information acquisition optical system is disposed on the optical path of the fluorescence from the sample S and a state (second optical state) in which the wavelength information acquisition optical system is separated from the optical path of the fluorescence. Note that the wavelength information acquisition optical system 13 only needs to be able to realize a plurality of optical states having different wavelength characteristics, and may be, for example, a fluorescence filter set including two or more fluorescence filters having different wavelength characteristics. In the first optical state, the wavelength information acquisition optical system 13 transmits the fluorescence generated in the sample S and transmitted through the dichroic mirror 11 and the camera-side filter set 9b toward the camera 15 with a predetermined wavelength characteristic. In the second optical state different from the first optical state, the wavelength information acquisition optical system 13 causes the fluorescence transmitted through the dichroic mirror 11 and the camera-side filter set 9b to enter the camera 15 in the optical state as it is (without being transmitted through the wavelength information acquisition optical system 13). For example, as the wavelength information acquisition optical system 13, a dichroic mirror (also referred to as an inclined filter) having a wavelength characteristic of transmittance in which the transmittance linearly increases as the wavelength increases is used. Furthermore, as the wavelength information acquisition optical system 13, a dichroic mirror (inclined filter) having a wavelength characteristic of transmittance in which the transmittance linearly decreases as the wavelength decreases may be used. The wavelength information acquisition optical system 13 using such a dichroic mirror can cause fluorescence to enter the camera 15 with two different wavelength transmission characteristics.

The camera 15 is an imaging device that images a two-dimensional image including N (N is an integer of 2 or more, for example, $2048 \times 2048$) pixels, and is a camera that images the fluorescent transmitted through the wavelength information acquisition optical system 13 to acquire a first fluorescence image when the wavelength information acquisition optical system 13 is switched to the optical path of the fluorescent (in the first optical state). In addition, when the wavelength information acquisition optical system 13 is separated from the optical path of the fluorescence (in the second optical state), the camera 15 images the fluorescence that does not transmit through the wavelength information acquisition optical system 13, and acquires a second fluorescence image. The camera 15 acquires the first fluorescence image and the second fluorescence image for each of the plurality of types of fluorescence generated from the sample S by each of the excitation light beams of the plurality of wavelength bands emitted by the excitation light source 7. The camera 15 outputs the acquired first fluorescence image and second fluorescence image to the image processing device 5 by using communication or via a recording medium.

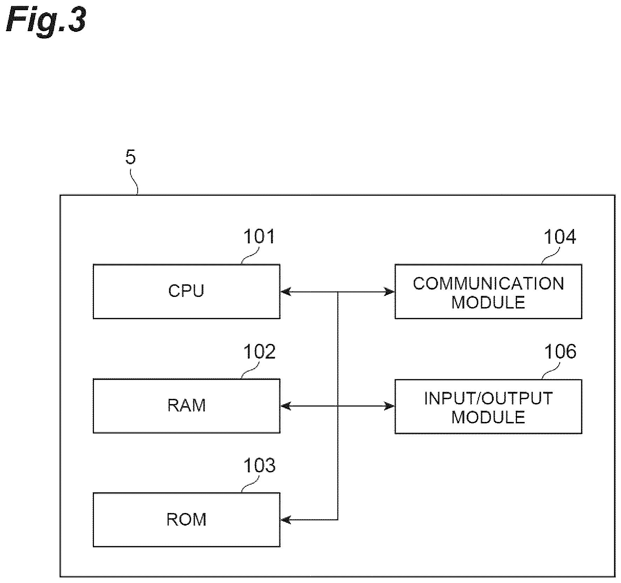

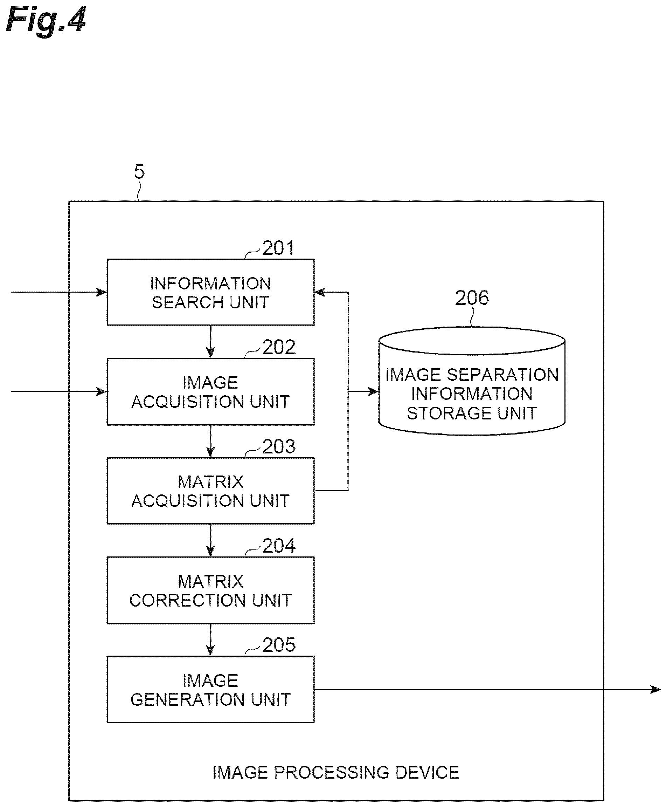

Next, a configuration of the image processing device 5 will be described with reference to FIGS. 3 and 4. FIG. 3 is a block diagram illustrating an example of a hardware configuration of the image processing device 5, and FIG. 4 is a block diagram illustrating a functional configuration of the image processing device 5.

As illustrated in FIG. 3, the image processing device 5 is physically a computer or the like including a central processing unit (CPU) 101 that is a processor, a random access memory (RAM) 102 or a read only memory (ROM) 103 that is a recording medium, a communication module 104, an input/output module 106, and the like, which are electrically coupled to each other. Note that the image processing device 5 may include, as input/output devices, a display, a keyboard, a mouse, a touch panel display, or the like, or may include a data recording device such as a hard disk drive or a semiconductor memory. Furthermore, the image processing device 5 may include a plurality of computers.

As illustrated in FIG. 4, the image processing device 5 includes an information search unit (selection unit) 201, an image acquisition unit 202, a matrix acquisition unit 203, a matrix correction unit 204, an image generation unit 205, and an image separation information storage unit (storage unit) 206 as functional components. Note that the information search unit 201 and the image separation information storage unit 206 may be external devices connected to the image processing device 5. Each functional unit of the image processing device 5 illustrated in FIG. 4 is realized by operating the communication module 104, the input/output module 106, and the like and reading and writing data in the RAM 102 under the control of the CPU 101 by reading a program (separated image acquisition program according to the embodiment) on hardware such as the CPU 101 and the RAM 102. The CPU 101 of the image processing device 5 executes the computer program to cause each functional unit in FIG. 4 to function, and sequentially executes processing corresponding to a separated image acquisition method to be described later.

Note that the CPU 101 may be a single piece of hardware or may be implemented in programmable logic such as an FPGA like a software processor. The RAM or the ROM may be a single piece of hardware or may be built in a programmable logic such as an FPGA. Various types of data necessary for execution of the computer program and various types of data generated by execution of the computer program are all stored in an internal memory such as the ROM 103 and the RAM 102 or a storage medium such as a hard disk drive. Hereinafter, functions of functional components of the image processing device 5 will be described in detail.

The information search unit 201 searches (selects) a desired mixing matrix from the data stored in the image separation information storage unit 206 based on an image acquisition condition at the time of acquiring the first fluorescence image or the second fluorescence image for the sample S, information (estimation processing information) related to estimation processing of a mixing matrix (image separation information) based on the first fluorescence image and the second fluorescence image, storage setting information at the time of storing the mixing matrix in the image separation information storage unit 206, and the like. The information search unit 201 may set the image acquisition condition, the estimation processing information, the storage setting information, and the like used for the search based on information input from the user via the input/output module 106 of the image processing device 5, based on information transmitted from an external device such as the image acquisition device 3, or based on information referred to from the RAM 102, the ROM 103, or the like of the image processing device 5.

Examples of the above image acquisition condition include a type of the sample S, information of a barcode attached to the sample S, a type of the fluorescent dye included in the sample S, a date and time of staining of the sample S, a measurement date and time of the sample S, a type of the excitation light, an intensity of each excitation light, a type or number of filters (presence or absence of an inclined filter or the like), a type of the camera, a type or magnification of an objective lens, an exposure time of each excitation light, an environmental temperature, data of the acquired fluorescence image itself, and the like. Examples of the estimation processing information include version information of software used for the estimation processing, an algorithm, a parameter, or an option used for the estimation processing, a time required for the estimation processing, and the like. Examples of the storage setting information include a stored user name, a project name, an assay name, a mixing matrix name, tag information (freely attached keyword, hash tag of SNS), and the like.

In the image separation information storage unit 206, a mixing matrix acquired by a matrix acquisition unit 203 to be described later is stored in association with an image acquisition condition at the time of acquiring a plurality of fluorescence images (for example, the first fluorescence image and the second fluorescence image) on which the mixing matrix is based, estimation processing information regarding estimation processing used at the time of acquiring the mixing matrix, and storage setting information at the time of storing the mixing matrix. The information search unit 201 searches (selects) a mixing matrix associated with information that matches or corresponds to (is similar to) a search key including an image acquisition condition, estimation processing information, storage setting information set by a user, an external device, or the like. Then, the information search unit 201 passes the search result of the mixing matrix to the image acquisition unit 202 and the matrix acquisition unit 203. At this time, the information search unit 201 searches the mixing matrix by using at least one of the items of the image acquisition condition, the estimation processing information, and the storage setting information described above as a search key. The information search unit 201 searches the mixing matrix by using a search key including at least one item of the image acquisition condition.

In a case where the mixing matrix with which the search key such as the image acquisition condition matches or corresponds (is similar) is not found in the search processing by the information search unit 201, the image acquisition unit 202 acquires a first fluorescence image (first reference fluorescence image) and a second fluorescence image (second reference fluorescence image) from the image acquisition device 3 in order to newly acquire the mixing matrix.

Specifically, when the mixing matrix is not found by the information search unit 201, the image acquisition unit 202 acquires C (C is an integer of 2 or more) first reference fluorescence images designated in advance for the sample S from the image acquisition device 3. These C first reference fluorescence images are fluorescence images constituted by N pixels generated by irradiating the sample S with excitation light beams of the C wavelength bands in the first optical state and imaging the fluorescence generated from the sample S in response to the irradiation. At this time, the number C (the number C of wavelength bands of excitation light beams with which the sample S is irradiated) of the first reference fluorescence images to be acquired is specified in advance so as to be equal to or larger than a maximum number of fluorescent dyes that can be included in the sample S. Similarly, the image acquisition unit 202 acquires C second reference fluorescence images in the second optical state.

On the other hand, when the mixing matrix is found by the information search unit 201, the image acquisition unit 202 does not acquire the fluorescence image in the first optical state, but acquires the C fluorescence images for the sample S in the second optical state as the C target fluorescence images for acquiring the fluorescent dye image in the same manner as described above.

The matrix acquisition unit 203 acquires a mixing matrix based on the C sets of first reference fluorescence images and second reference fluorescence images acquired by the image acquisition unit 202. The function of acquiring the mixing matrix includes a clustering function and a statistical value calculation function.

The clustering function of the matrix acquisition unit 203 will be described.

The matrix acquisition unit 203 calculates a ratio between a fluorescence intensity (luminance value) of one fluorescence image and a fluorescence intensity of the other fluorescence image for each of the C sets of first reference fluorescence images and second reference fluorescence images, thereby estimating a centroid fluorescence wavelength indicating a centroid of the wavelength distribution of fluorescence. At this time, the matrix acquisition unit 203 calculates an average value of the fluorescence intensities of the one fluorescence image and an average value of the fluorescence intensities of the other fluorescence image for the pixel groups clustered by the clustering function described below, and calculates a ratio of these average values. The matrix acquisition unit 203 acquires the estimated centroid fluorescence wavelength as wavelength information related to a fluorescence wavelength.

The matrix acquisition unit 203 performs clustering on N pixels constituting the C first reference fluorescence images and the C second reference fluorescence images based on the C first reference fluorescence images, the C second reference images, and the acquired wavelength information acquired by the image acquisition unit 202. Prior to the clustering processing, the matrix acquisition unit 203 generates matrix data Y in which fluorescence intensity values of the N pixels configuring each of the C first reference fluorescence images and the C second reference fluorescence images are one-dimensionally arranged in parallel.

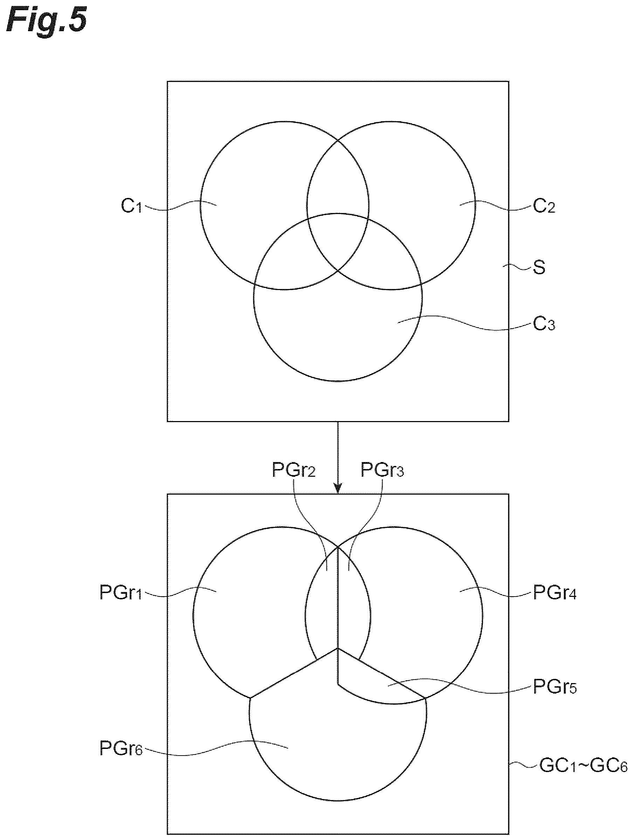

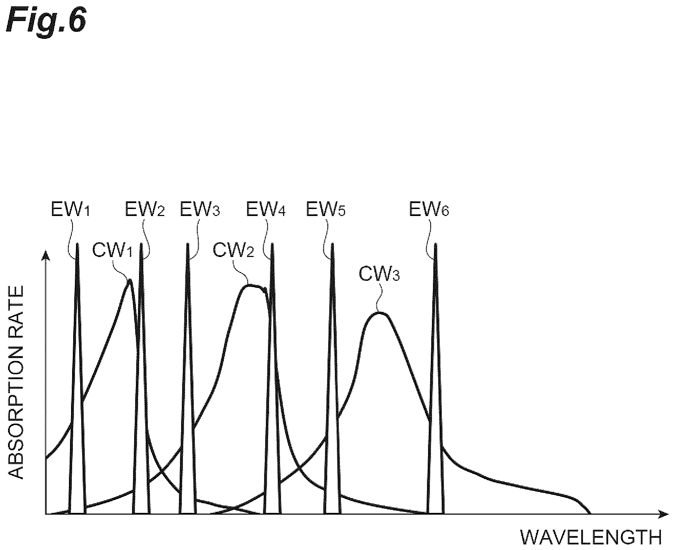

Next, the matrix acquisition unit 203 has a function (first clustering function) of clustering the N pixels of the second reference fluorescence images into C pixel groups based on distribution information of fluorescence intensities for each excitation light beams of the C wavelength bands. Specifically, the matrix acquisition unit 203 clusters pixels having the same wavelength band of excitation light having a highest fluorescence intensity into the same pixel group. FIG. 5 illustrates an image of pixel groups clustered by the first clustering function by the matrix acquisition unit 203, and FIG. 6 illustrates wavelength characteristics of absorption rates of excitation light beams of a plurality of fluorescent dyes included in the sample S. As illustrated in FIG. 5, assuming a case where there are three types of fluorescent dyes including a fluorescent dye $C_1$, a fluorescent dye $C_2$, and a fluorescent dye $C_3$ in the sample S, and six second reference fluorescence images are obtained by using excitation light beams of six types of wavelength bands, the matrix acquisition unit 203 clusters N pixels included in the six second reference fluorescence images $GC_1$ to $GC_6$ into six pixel groups $PGr_1$ to $PGr_6$. As illustrated in FIG. 6, in general, different types of fluorescent dyes have wavelength characteristics of different absorption rates, and the three types of fluorescent dyes $C_1$, $C_2$, and $C_3$ also have wavelength characteristics $CW_1$, $CW_2$, and $CW_3$ having different peak wavelengths. Therefore, in six types of wavelength bands $EW_1$, $EW_2$, $EW_3$, $EW_4$, $EW_5$, and $EW_6$ of the excitation light beams, a fluorescent dye having a largest absorption rate is determined to be one of the three types of fluorescent dyes $C_1$, $C_2$, and $C_3$. For example, the fluorescent dye $C_1$ has the largest absorption rate of the excitation light of the wavelength band $EW_1$, the fluorescent dye $C_1$ has the largest absorption rate of the excitation light of the wavelength band $EW_2$, and the fluorescent dye $C_2$ has the largest absorption rate of the excitation light of the wavelength band $EW_3$. By using this property, the matrix acquisition unit 203 can cluster N pixels into a pixel group in a range in which the same fluorescent dye is distributed by the first clustering function. However, the six pixel groups $PGr_1$ to $PGr_6$ clustered by the first clustering function do not correspond to the three types of fluorescent dyes $C_1$, $C_2$, and $C_3$ on a one-to-one basis.

In addition, the matrix acquisition unit 203 has a function (second clustering function) of further clustering the C pixel groups clustered by the first clustering function into L (L is an integer of 2 or more and N-1 or less) pixel groups based on the wavelength information. Here, the number L of pixel groups to be clustered is set in advance as a parameter stored in the image processing device 5 in correspondence with, for example, the number of types of fluorescent dyes that can exist in the sample S. The number L of pixel groups may be determined according to the type of excitation light and the number C of wavelength distributions of excitation light beams, or may be determined independently of the type of excitation light and the number C of wavelength distributions of excitation light beams. That is, the matrix acquisition unit 203 specifies a centroid fluorescence wavelength estimated for the wavelength band of the excitation light corresponding to the pixel group for each of the C pixel groups clustered by the first clustering function. More specifically, the matrix acquisition unit 203 acquires wavelength information for a pixel group clustered with a certain wavelength band having a largest absorption rate, and specifies a centroid fluorescence wavelength based on the acquired wavelength information. At this time, the wavelength information is acquired by using an average value of fluorescence intensities in the pixel groups of a set of the first reference fluorescence image and the second reference fluorescence image obtained corresponding to the wavelength band. Further, the matrix acquisition unit 203 clusters the C pixel groups into L pixel groups by determining a distance (closeness of values) between centroid fluorescence wavelengths specified for each of the C pixel groups. Then, the matrix acquisition unit 203 divides and regenerates the matrix data Y in which the fluorescence intensity values of the pixels of the C first reference fluorescence images and the fluorescence intensity values of the pixels of the C second reference fluorescence images are one-dimensionally arranged in parallel into a cluster matrix for each of the L pixel groups.

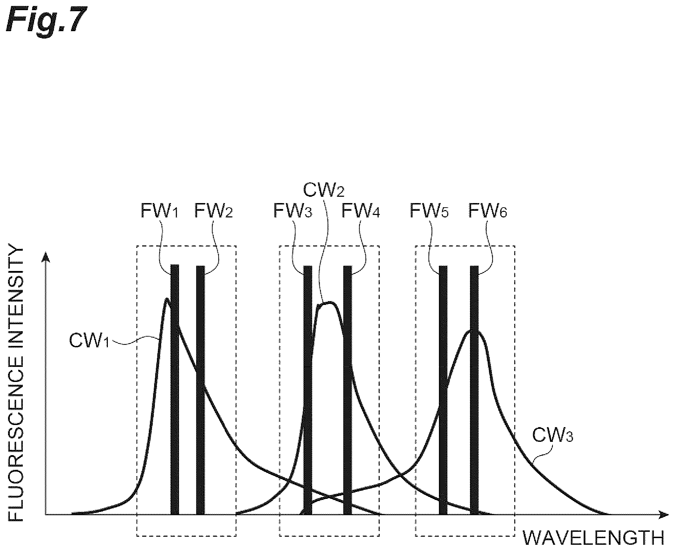

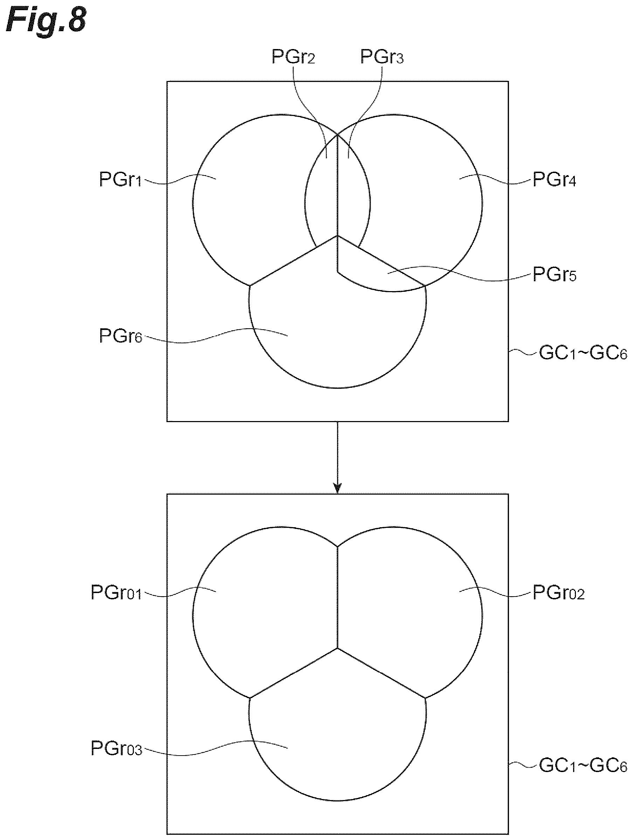

FIG. 7 illustrates a distribution of centroid fluorescence wavelengths specified by the matrix acquisition unit 203, and FIG. 8 illustrates an image of pixel groups clustered by the second clustering function by the matrix acquisition unit 203. In the example illustrated in FIGS. 7 and 8, centroid fluorescence wavelengths $FW_1$ to $FW_6$ are specified for each of the six pixel groups $PGr_1$ to $PGr_6$ clustered by the first clustering function, the pixel group $PGr_1$ and the pixel group $PGr_2$ in which the distances between the centroid fluorescence wavelengths close to each other are clustered into a new pixel group $PGr_{01}$, similarly, the pixel group $PGr_3$ and the pixel group $PGr_4$ are clustered into a pixel group $PGr_{02}$, and the pixel group $PGr_5$ and the pixel group $PGr_6$ are clustered into a pixel group $PGr_{03}$. As a result, the pixels of the C fluorescence images can be divided into L pixel groups corresponding to the distribution of the fluorescent dyes assumed to be included in the sample S. However, the division number L by the second clustering function is set to be equal to or less than the number C (the number C of wavelength bands of excitation light) of fluorescence images.

Next, the statistical value calculation function of the matrix acquisition unit 203 will be described.

Based on L cluster matrices obtained for the sample S, the matrix acquisition unit 203 obtains a mixing matrix A for generating K fluorescent dye images indicating the distribution of each of K (K is an integer of 2 or more and C or less) fluorescent dyes from the C first reference fluorescence images and the C second reference fluorescence images. In general, according to the calculation method of nonnegative matrix factorization (NMF), the relationship between the matrix data Y which is an observation value matrix and the fluorescent dye matrix data X in which K fluorescent dye images are arranged one-dimensionally in parallel for each pixel is expressed by the following formula by using the mixing matrix A;

$$Y = AX.$$

Here, Y is matrix data of $C \times 2$ rows and N columns, A is matrix data of $C \times 2$ rows and K columns, and X is matrix data of K rows and N columns. On the contrary, when the value of the mixing matrix A is obtained, the fluorescent dye matrix data X can be derived by the following formula by using an inverse matrix $A^{-1}$ of the mixing matrix A and the matrix data Y (this processing is called unmixing);

$$X = A^{-1}Y.$$

Here, the matrix acquisition unit 203 regenerates matrix data Y' by compressing the matrix data Y generated by the clustering function in units of pixel groups clustered by the clustering function. Specifically, the matrix acquisition unit 203 calculates a statistical value for each pixel group of the clustered cluster matrix for the fluorescence intensity of each row of the matrix data Y, and compresses the pixel group of each row into one pixel having the calculated statistical value. As a result, the matrix acquisition unit 203 regenerates the matrix data Y' which is matrix data of $C \times 2$ rows and L columns. The matrix acquisition unit 203 may calculate, as the statistical value, an average value based on the integrated value of the fluorescence intensities, may calculate a mode of the fluorescence intensities, or may calculate a median of the fluorescence intensities.

Further, the matrix acquisition unit 203 derives the mixing matrix A based on the matrix data Y' by utilizing the property that the following formula including the mixing matrix A holds true in the regenerated matrix data Y' and the fluorescent dye matrix data X' compressed in the same manner from the fluorescent dye matrix data X;

$$Y' = AX'.$$

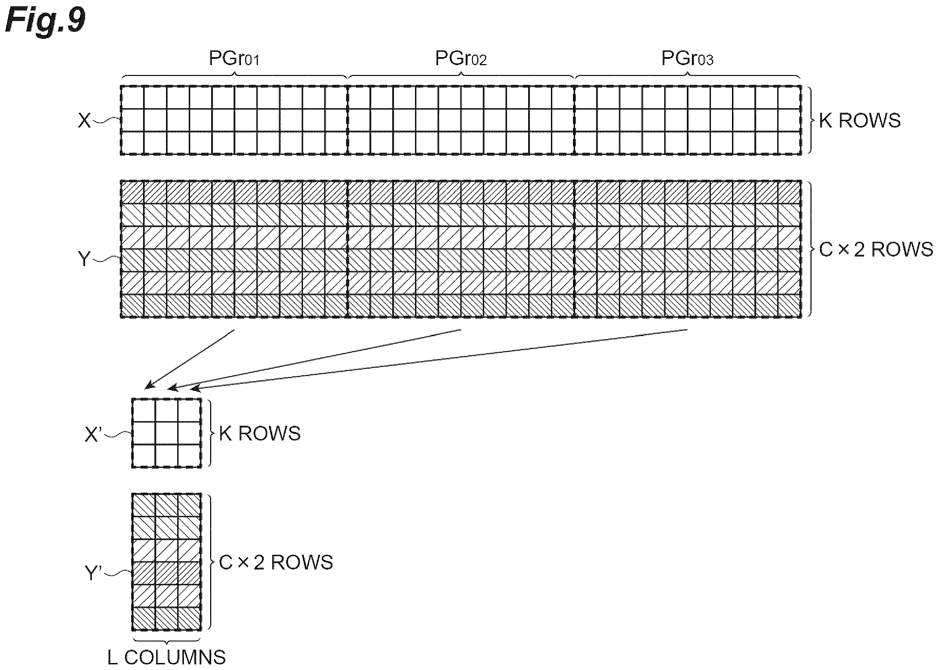

FIG. 9 illustrates an image of the matrix data Y' regenerated by the matrix acquisition unit 203 and the fluorescent dye matrix data X' corresponding thereto. One grid illustrated in FIG. 9 represents one element of the matrix data. As described above, the fluorescent dye matrix data X and the matrix data Y divided into the three pixel groups $PGr_{01}$ to $PGr_{01}$ are data compressed into the fluorescent dye matrix data X' and the matrix data Y' of three columns with the statistical value for each of the pixel groups $PGr_{01}$ to $PGr_{03}$ as a representative value.

The matrix acquisition unit 203 derives the mixing matrix A based on the matrix data Y' as follows. That is, the matrix acquisition unit 203 sets an initial value for the mixing matrix A, calculates the following loss function (loss value) Los while sequentially changing the value of the mixing matrix A, and derives the mixing matrix A that reduces the value of the loss function Los. Note that a regularization term such as L1 norm $\lambda |A|$ ($\lambda$ is a coefficient indicating a degree to which the regularization term is emphasized) may be added to the loss function.

## [Mathematical Formula 1]

$$Los = \sum_{j}^{2C} \frac{1}{a}(Y' - AX')_{1j}{}^2 + \sum_{j}^{2C} \frac{1}{b}(Y' - AX')_{2j}{}^2 + \sum_{j}^{2C} \frac{1}{c}(Y' - AX')_{3j}{}^2$$

In the above formula, j is a parameter indicating a position (corresponding to the wavelength band of the excitation light for each of the two fluorescence images) of a row of the matrix data, a subscript 1j of the matrix indicates matrix data of a j-th row of the first cluster matrix, a subscript 2j of the matrix indicates matrix data of a j-th row of the second cluster matrix, and a subscript 3j of the matrix indicates matrix data of a j-th row of the third cluster matrix. In addition, the parameters a, b, and c indicate the average values of the statistical values of the respective columns of the matrix data Y'.

As described above, the matrix acquisition unit 203 calculates the loss function with reference to the statistical values of the $C \times 2$ pieces of matrix data Y' for each of the L cluster matrices divided by the clustering function, calculates the loss function Los based on a sum of the L loss functions, and obtains the mixing matrix A based on the loss function Los. At this time, the matrix acquisition unit 203 corrects the loss function calculated for each of the L cluster matrices by dividing the loss function by the average values a, b, and c of the statistical values of the $C \times 2$ pieces of matrix data Y', and then calculates a sum of the corrected loss functions to obtain the loss function Los. Note that the matrix acquisition unit 203 may calculate the loss function for each of the L cluster matrices by correcting the loss function by dividing the row component for each wavelength band of the excitation light having a difference value Y' - AX' by using the $C \times 2$ statistical values corresponding to each wavelength band of the excitation light.

Note that the above formula can also be generalized as follows. That is, the matrix acquisition unit 203 derives the mixing matrix A and the fluorescent dye matrix data X' based on the matrix data Y' as follows. That is, the matrix acquisition unit 203 sets initial values for the mixing matrix A and the fluorescent dye matrix data X', calculates the loss function (loss value) Los by using the following formula while sequentially changing the values of the mixing matrix A and the fluorescent dye matrix data X', and derives the mixing matrix A and the fluorescent dye matrix data X' that reduce the value of the loss function Los. Note that a regularization term such as L1 norm $\lambda |A|$ ($\lambda$ is a coefficient indicating a degree to which the regularization term is emphasized) may be added to the loss function. Alternatively, the calculation may be performed with a constraint that the mixing matrix A and the fluorescent dye matrix data X' have nonnegative values.

[Mathematical Formula 2]

$$Los = \sum_{i}^{L} Los_i = \sum_{i}^{L} \sum_{j}^{2C} w_{ij} (Y' - AX')_{ij}^{2}$$

In the above formula, j is a parameter indicating a position (corresponding to the wavelength band of the excitation light) of the row of the matrix data, and i is a parameter indicating a position (corresponding to an i-th cluster) of the column of the matrix data. Further, $w_{ij}$ represents a weight of each element of the matrix data, and may be calculated from the value of each element or its standard deviation. In addition, it is also possible to set all $w_{ij}$ to the same value and not consider the weight of each element. Note that a formula in which the average values of the statistical values of the respective columns of the matrix data Y' are set as a, b, c, ... in the above formula and is replaced with $w_{1j} = 1/a$, $w_{2j} = 1/b$, and $w_{3j} = 1/c$ is the same as the formula of the loss function Los described above.

As described above, the matrix acquisition unit 203 calculates the loss function with reference to the statistical values of the $C \times 2$ pieces of matrix data Y' for each of the L cluster matrices divided by the clustering function, calculates the loss function Los based on a sum of the L loss functions $Los_i$, and obtains the mixing matrix A based on the loss function Los. Note that the matrix acquisition unit 203 may calculate the loss function $Los_i$ for each of the L cluster matrices by correcting the loss function by dividing the row component for each wavelength band of the excitation light having a difference value Y' - AX' by using the $C \times 2$ statistical values corresponding to each wavelength band of the excitation light.

The matrix acquisition unit 203 stores the mixing matrix (image separation information for obtaining fluorescent dye images of separated types of fluorescence) acquired by using the clustering function and the statistical value calculation function described above in the image separation information storage unit 206 in association with the image acquisition condition, the estimation processing information, the storage setting information, and the like. The image acquisition condition, the estimation processing information, and the storage setting information associated with the mixing matrix are information corresponding to the time of acquisition of the first fluorescence image or the second fluorescence image, information corresponding to the time of estimation of the mixing matrix, or information corresponding to the time of storage of the mixing matrix.

When the mixing matrix is found by the information search unit 201, the matrix correction unit 204 acquires a corrected mixing matrix that is a mixing matrix corrected based on the mixing matrix and the C target fluorescence images acquired by the image acquisition unit 202. That is, the matrix correction unit 204 generates matrix data $Y_2$ in which the fluorescence intensity values of the pixels of the C target fluorescence images are one-dimensionally arranged in parallel. In addition, the matrix correction unit 204 extracts matrix data of C rows and K columns corresponding to the rows of the second fluorescence image from among the elements of the searched mixing matrix A as a mixing matrix $A_0$. Further, the matrix correction unit 204 acquires corrected mixing matrix (corrected image separation information) $A_2$ by using the matrix data $Y_2$ and the mixing matrix $A_0$. Here, the mixing matrix $A_2$ is matrix data of C rows and K columns including only rows corresponding to the rows of the second fluorescence image among the elements of the mixing matrix A.

For example, the corrected mixing matrix is obtained as follows. The matrix correction unit 204 clusters the matrix data $Y_2$ by the clustering function and compresses the matrix data $Y_2$ in units of pixel groups, thereby regenerating matrix data $Y_2'$. For example, this clustering is performed similarly to the processing in the matrix acquisition unit 203 based on the distribution of the fluorescence intensity for each of the C wavelength bands. Then, the matrix correction unit 204 uses the mixing matrix $A_0$ as an initial value to obtain mixing matrix $A_2$ and fluorescent dye matrix data X' that minimize the Euclidean distance calculated by the following formula;

$$L = \|Y_2' - A_2 X'\|^2.$$

Here, instead of the above formula, a formula to which a regularization term such as the following formula is added may be used.

$$L = \|Y_2' - A_2 X'\|^2 + \lambda \|A_2 - A_0\|^2$$

By adding the regularization term, it is possible to perform control so that the deviation from the initial value does not become too large. In addition to the regularization term, a term such as L1 norm $\|A_2\|_1$ may be added in order to impose a sparse constraint on the matrix $A_2$. In addition, the values of the other elements may be corrected by fixing the values expected to be correct among the elements of the mixing matrix $A_0$. Instead of the Euclidean distance, a loss function such as Kullback-Leibler divergence or Itakura-Saito divergence may be used.

When the mixing matrix is not found by the information search unit 201, the image generation unit 205 acquires K fluorescent dye images by unmixing the C second reference fluorescence images obtained for the sample S to be observed by using the mixing matrix A newly acquired by the matrix acquisition unit 203. Specifically, the image generation unit 205 calculates the fluorescent dye matrix data X by extracting the mixing matrix $A_2$ from the mixing matrix A and applying the inverse matrix $A_2^{-1}$ of the mixing matrix $A_2$ to the matrix data $Y_2$ generated based on the C second reference fluorescence images.

When the mixing matrix is found by the information search unit 201, the image generation unit 205 calculates the fluorescent dye matrix data X by unmixing the C target fluorescence images obtained for the sample S to be observed by using the mixing matrix $A_2$ corrected by the matrix correction unit 204 in the same manner as the above procedure.

Then, the image generation unit 205 regenerates K fluorescent dye images from the fluorescent dye matrix data X, and outputs the regenerated K fluorescent dye images. The output destination at this time may be an output device of the image processing device 5 such as a display or a touch panel display, or may be an external device coupled to the image processing device so as to be capable of data communication.

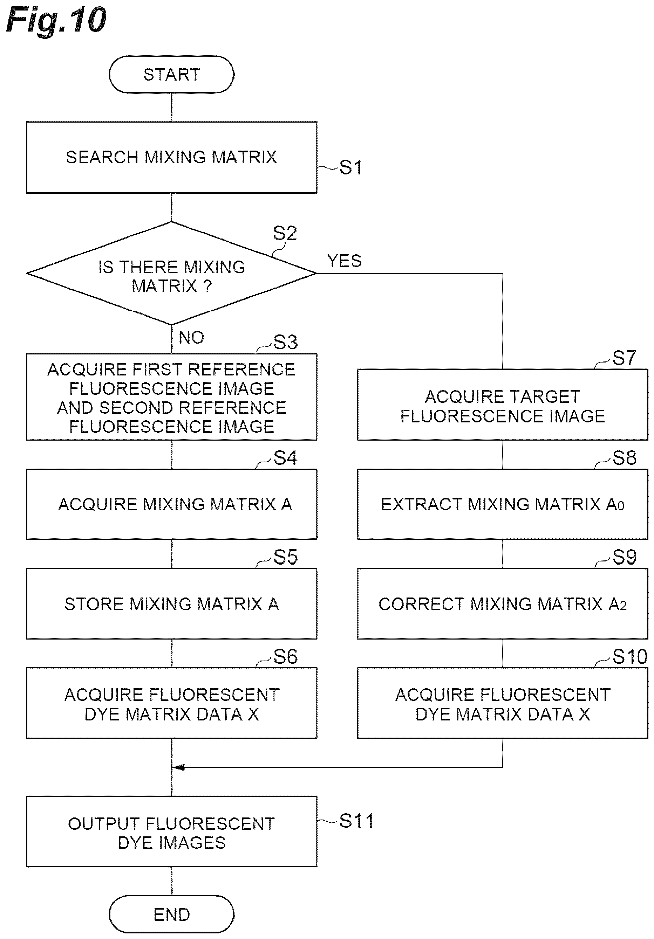

Next, a procedure of observation processing on the sample S using the fluorescent dye image acquisition system 1 according to the present embodiment, that is, a flow of a separated image acquisition method according to the present embodiment will be described. FIG. 10 is a flowchart illustrating a procedure of observation processing by the fluorescent dye image acquisition system 1.

First, the information search unit 201 of the image processing device 5 searches a mixing matrix A from data stored in the image separation information storage unit 206 using a set image acquisition condition and the like as a search key (step S1). As a result of the search, in a case where the mixing matrix is not found (step S2; No), the image acquisition unit 202 of the image processing device 5 acquires C first reference fluorescence images and C second reference fluorescence images that are results of fluorescence observation of the sample S (step S3).

Next, the matrix acquisition unit 203 of the image processing device 5 acquires a mixing matrix A based on the C first reference fluorescence images and the C second reference fluorescence images (step S4). Thereafter, the acquired mixing matrix A is stored in the image separation information storage unit 206 in association with the image acquisition condition or the like by the matrix acquisition unit 203 (step S5; storage step). Further, fluorescent dye matrix data X is acquired by the image generation unit 205 based on matrix data $Y_2$ in which N pixels of the C second reference fluorescence images are arranged in parallel and a matrix $A_2$ extracted from the mixing matrix A (step S6).

On the other hand, in a case where the mixing matrix is found as a result of the search (step S2; Yes), the image acquisition unit 202 of the image processing device 5 acquires C target fluorescence images that are results of fluorescence observation of the sample S (step S7; acquisition step). Next, a mixing matrix $A_0$ is extracted (selected) from the mixing matrix A searched by the matrix correction unit 204 of the image processing device 5 (step S8). Furthermore, the matrix correction unit 204 acquires a mixing matrix $A_2$ corrected by using the matrix data $Y_2$ generated from the C target fluorescence images and the mixing matrix $A_0$ (step S9). Then, the fluorescent dye matrix data X is acquired by the image generation unit 205 based on the matrix data $Y_2$ and the mixing matrix $A_2$ (step S10; generation step). Note that the corrected mixing matrix $A_2$ may be stored in the image separation information storage unit 206.

Finally, the image generation unit 205 of the image processing device 5 regenerates K fluorescent dye images from the fluorescent dye matrix data X acquired in step S6 or step S10, and outputs these K fluorescent dye images (step S11; generation step). Thus, the observation processing for the sample S is completed.

According to the fluorescent dye image acquisition system 1 described above, a desired mixing matrix is selected from a plurality of mixing matrices for obtaining fluorescent dye images acquired based on the C first reference fluorescence images and the C second reference fluorescence images, the C target fluorescence images captured in the same optical state as the optical state of either the first reference fluorescence image or the second reference fluorescence image are acquired, and the fluorescent dye images are generated by using the acquired C target fluorescence images and the selected mixing matrix. As a result, even when the type of excitation light used for observation or the number of fluorescent dyes to be observed is large, unmixing can be performed by utilizing the mixing matrix acquired in the past, and a calculation amount of unmixing can be suppressed. As a result, it is possible to improve throughput at the time of acquiring the fluorescent dye image by unmixing.

Furthermore, in the present embodiment, the mixing matrix corresponding to the image acquisition condition is selected from mixing matrices generated based on the fluorescence images acquired in the past, and unmixing is performed by using the selected mixing matrix. As a result, since a mixing matrix suitable for the target fluorescence image is selected, the separation accuracy of the acquired fluorescent dye image can be improved.

In addition, in the present embodiment, the corrected mixing matrix is acquired based on the target fluorescence image and the searched mixing matrix. As a result, since the mixing matrix acquired in the past is corrected by using the target fluorescence image, unmixing suitable for the target fluorescence image is performed, and the separation accuracy of the acquired fluorescent dye image can be further improved.

In the present embodiment, the fluorescent dye image is generated by using the corrected mixing matrix and the target fluorescence image. In this case, unmixing suitable for the target fluorescence image is performed, and the separation accuracy of the acquired fluorescent dye image can be further improved. That is, the mixing matrix generated in the past may include an error due to the influence of noise of the past fluorescence image used for estimating the mixing matrix. In this case, when the mixing matrix is directly used for the target fluorescence image, the error of the fluorescent dye image generated from the target fluorescence image including noise having different properties tends to increase. On the other hand, in the present embodiment, since the mixing matrix corrected based on the target fluorescence image is used, it is possible to suppress an error of the generated fluorescent dye image.

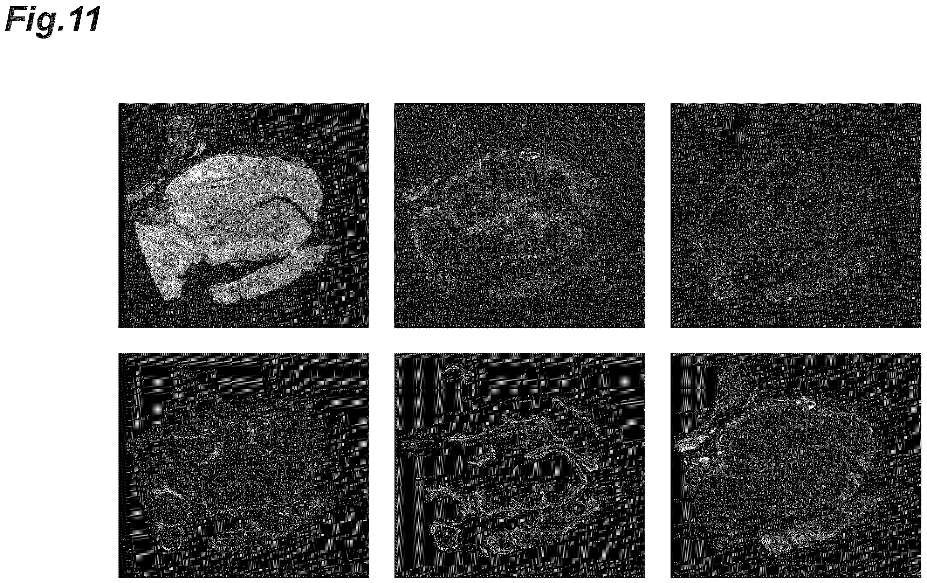

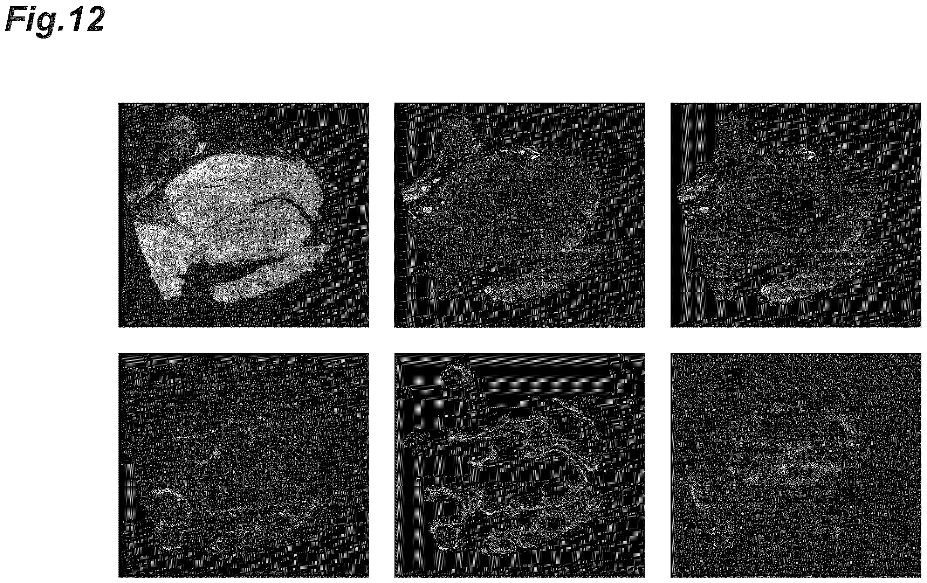

FIG. 11 illustrates an example of fluorescent dye images generated based on a target fluorescence image by the fluorescent dye image acquisition system 1 according to the present embodiment. FIG. 12 illustrates an example of fluorescent dye images generated based on the target fluorescence image without correcting the mixing matrix by the fluorescent dye image acquisition system 1 according to the present embodiment. The same fluorescent dye images are indicated at positions corresponding to each other in FIGS. 11 and 12. As described above, according to the present embodiment, it has been found that the image quality of some fluorescent dye images (particularly, the fluorescent dye image in the upper right) is greatly improved by the correction of the mixing matrix.

Although various embodiments of the present invention have been described above, the present invention is not limited to the above embodiments, and may be modified or applied to other objects without changing the gist described in each claim.

For example, in the image acquisition device 3 of the present embodiment, the first fluorescence image and the second fluorescence image are acquired by attaching and detaching the wavelength information acquisition optical system 13. Instead, the image acquisition device 3 may include two cameras, and may be configured to acquire fluorescence images in two or more different optical states by causing each camera to detect fluorescence transmitted through the wavelength information acquisition optical system 13 and fluorescence reflected by the wavelength information acquisition optical system 13.

Alternatively, the image acquisition device 3 may include a color camera such as an RGB color camera, and acquire the reference fluorescence image and the target fluorescence image based on the image data for each wavelength characteristic output from the color camera. Even in such a case, it is configured to acquire fluorescence images in two or more different optical states. Furthermore, alternatively, the image acquisition device 3 may include a hyperspectral camera, and acquire a fluorescence image based on image data for each wavelength characteristic output from the hyperspectral camera. Even in such a case, it is configured to acquire fluorescence images in two or more different optical states.

In addition, the matrix correction unit 204 of the image processing device 5 functions to correct the mixing matrix A in a case where the mixing matrix is found by the information search unit 201. On the other hand, the matrix correction unit 204 of the image processing device 5 may function to always correct the mixing matrix A regardless of the search result of the mixing matrix by the information search unit 201.

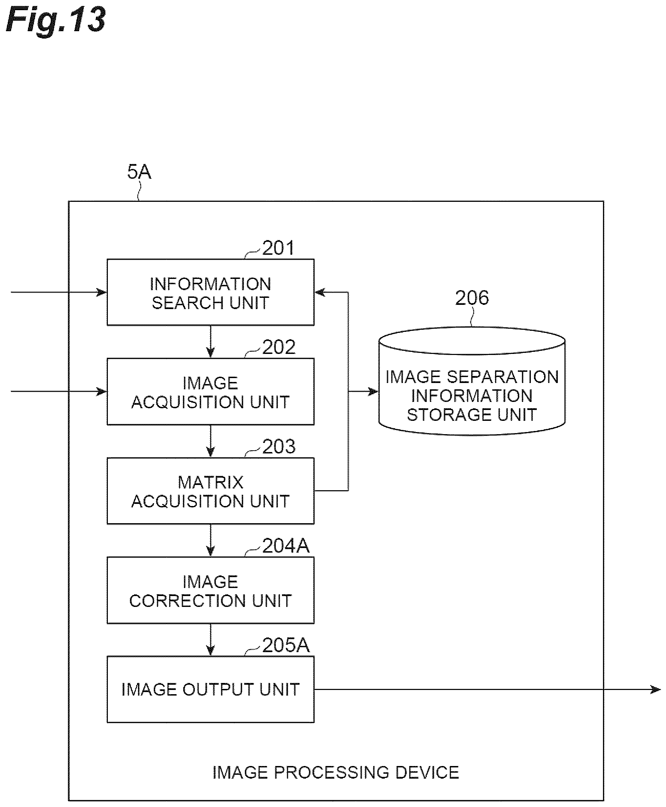

FIG. 13 illustrates a functional configuration of an image processing device 5A according to a modification. The image processing device 5A is different from the image processing device 5 in that the image processing device 5A includes an image correction unit 204A and an image output unit 205A instead of the matrix correction unit 204 and the image generation unit 205, and has a function of correcting the fluorescent dye matrix data X without correcting the mixing matrix.

The image correction unit 204A generates fluorescent dye matrix data X by unmixing the C target fluorescence images by using the mixing matrix $A_0$ extracted from the mixing matrix A searched by the information search unit 201 as it is. Then, the image correction unit 204A generates fluorescent dye matrix data $X_C$ corrected by using the matrix data $Y_2$ and the mixing matrix $A_0$.

For example, the corrected fluorescent dye matrix data $X_C$ is acquired as follows. The image correction unit 204A uses the mixing matrix $A_0$ and the fluorescent dye matrix data X generated first as initial values to obtain the mixing matrix $A_2$ and the fluorescent dye matrix data X that minimize the Euclidean distance calculated by the following formula;

$$L = \|Y_2 - A_2X\|^2.$$

Here, instead of the above formula, a formula to which a regularization term such as the following formula is added may be used.

$$L = \|Y_2 - A_2X\|^2 + \lambda(|\Delta_xX| + |\Delta_yX|)$$

This regularization term is a regularization term of the total variation loss, and is a term in which the L1 norm of the differential in each of the x and y directions is calculated using the matrix data X as an image. In addition, a formula in which a regularization term related to the mixing matrix A is combined with the above formula may be used.

The image output unit 205A regenerates K fluorescent dye images from the fluorescent dye matrix data $X_C$ corrected by the image correction unit 204A, and outputs the regenerated K fluorescent dye images.

According to the above modification, it is possible to obtain a fluorescent dye image corrected based on the mixing matrix acquired in the past and the target fluorescence image, and it is possible to further improve the separation accuracy of the acquired fluorescent dye image.

Furthermore, as another modification, the image correction unit 204A of the image processing device 5A may obtain the corrected fluorescent dye matrix data X by one of the following two methods.

As a first method, the image correction unit 204A generates fluorescent dye matrix data X by unmixing the C target fluorescence images by using the mixing matrix $A_0$ extracted from the mixing matrix A searched by the information search unit 201 as it is. Then, the image correction unit 204A inputs the generated fluorescent dye matrix data X to the learned inference model, and acquires an output of the learned inference model as corrected fluorescent dye matrix data $X_C$. Note that, at the time of learning the inference model, the image correction unit 204A can construct the learned inference model by using, as training data, a combination of the fluorescent dye matrix data X derived by unmixing in the matrix acquisition unit 203 and the fluorescent dye matrix data X obtained by unmixing the C target fluorescence images by using the mixing matrix $A_0$ as it is.

According to such a first method, the generated fluorescent dye image is input to the inference model, and the fluorescent dye image corrected based on the output of the inference model can be obtained. As a result, the separation accuracy of the acquired fluorescent dye image can be further improved.

In addition, as a second method, the image correction unit 204A inputs the matrix data $Y_2$ based on the C target fluorescence images and the mixing matrix $A_0$ extracted from the mixing matrix A searched by the information search unit 201 to the learned inference model, and acquires the output of the learned inference model as corrected fluorescent dye matrix data $X_C$. Note that, at the time of learning the inference model, the image correction unit 204A can construct the learned inference model by using, as training data, a combination of the fluorescent dye matrix data X derived by unmixing in the matrix acquisition unit 203, the mixing matrix $A_0$ extracted from the searched mixing matrix A, and the matrix data $Y_2$ based on the C target fluorescence images.

According to the second method, the target fluorescence image and the mixing matrix are input to the inference model, and the fluorescent dye image corrected based on the output of the inference model can be obtained. As a result, the separation accuracy of the acquired fluorescent dye image can be further improved.

In the first aspect, it is preferable that the image separation information is stored in association with an image acquisition condition at the time of the plurality of reference fluorescence images are acquired, and in the selection step, the image separation information associated with an image acquisition condition corresponding to an image acquisition condition at the time of acquiring the target fluorescence image is selected. In the second aspect, it is preferable that the storage unit stores the image separation information in association with an image acquisition condition when the plurality of reference fluorescence images are acquired, and the image processing device selects the image separation information associated with an image acquisition condition corresponding to an image acquisition condition at the time of acquiring the target fluorescence image. As a result, the image separation information corresponding to the image acquisition condition is selected among the image separation information generated based on the fluorescence image acquired in the past, and unmixing is performed by using the selected image separation information. As a result, the separation accuracy of the acquired separated image can be improved.

Furthermore, in the first aspect, in the generation step, it is also preferable that corrected image separation information that is image separation information corrected based on the target fluorescence image and the selected image separation information is acquired. Furthermore, in the second aspect, it is also preferable that, in the generation of the fluorescence separation image, the image processing device acquires corrected image separation information that is image separation information corrected based on the target fluorescence image and the selected image separation information. As a result, since the image separation information acquired in the past is corrected by using the target fluorescence image, unmixing suitable for the target fluorescence image is performed, and the separation accuracy of the acquired separated image can be further improved.

Furthermore, in the first aspect, in the generation step, it is also preferable to generate the fluorescence separation image by using the corrected image separation information and the target fluorescence image. Furthermore, in the second aspect, it is also preferable that, in the generation of the fluorescence separation image, the image processing device generates the fluorescence separation image by using the corrected image separation information and the target fluorescence image. In this case, unmixing suitable for the target fluorescence image is performed, and the separation accuracy of the acquired separated image can be further improved.

Furthermore, in the first aspect, in the generation step, it is preferable to correct the fluorescence separation image based on the target fluorescence image and the image separation information. Furthermore, in the second aspect, it is preferable that, in the generation of the fluorescence separation image, the image processing device corrects the fluorescence separation image based on the target fluorescence image and the image separation information. Also in this case, it is possible to obtain a fluorescence separation image corrected based on the image separation information acquired in the past and the target fluorescence image, and it is possible to further improve the separation accuracy of the acquired separated image.

Furthermore, in the first aspect, it is also preferable that, in the generation step, the fluorescence separation image generated based on the target fluorescence image and the image separation information is input to a learned inference model, and an output of the learned inference model is obtained as the corrected fluorescence separation image. Furthermore, in the second aspect, it is also preferable that, in the generation of the fluorescence separation image, the image processing device inputs the fluorescence separation image generated based on the target fluorescence image and the image separation information to a learned inference model, and obtains an output of the learned inference model as the corrected fluorescence separation image. In this case, the generated fluorescence separation image is input to the inference model, and the fluorescence separation image corrected based on the output of the inference model can be obtained. As a result, the separation accuracy of the acquired separated image can be further improved.

Furthermore, in the first aspect, it is also preferable that, in the generation step, the target fluorescence image and the image separation information are input to a learned inference model, and an output of the learned inference model is obtained as the corrected fluorescence separation image. Furthermore, it is also preferable that, in the generation of the fluorescence separation image, the image processing device inputs the target fluorescence image and the image separation information to a learned inference model, and obtains an output of the learned inference model as the corrected fluorescence separation image. In this way, the target fluorescence image and the image separation information are input to the inference model, and the fluorescence separation image corrected based on the output of the inference model can be obtained. As a result, the separation accuracy of the acquired separated image can be further improved.

Furthermore, in the first aspect, it is also preferable that the plurality of optical states include at least a first optical state in which the fluorescence is transmitted through an optical filter and a second optical state in which the fluorescence is not transmitted through the optical filter. Furthermore, in the second aspect, it is also preferable that the plurality of optical states include at least a first optical state in which the fluorescence is transmitted through an optical filter and a second optical state in which the fluorescence is not transmitted through the optical filter. In this way, wavelength information of fluorescence can be acquired based on fluorescence images in two types of optical states, and image separation information obtained as a result of clustering pixel groups of fluorescence images based on the wavelength information can be stored. As a result, it is possible to acquire a highly accurate separated image while reducing the entire calculation time.

Furthermore, in the first aspect, in the generation step, it is also preferable that a fluorescence separation image is generated based on the image separation information and the target fluorescence image acquired in the second optical state. Furthermore, in the second aspect, it is also preferable that, in the generation of the fluorescence separation image, the image processing device generates a fluorescence separation image based on the image separation information and the target fluorescence image acquired in the second optical state. According to such a configuration, it is possible to acquire a highly accurate separated image by performing unmixing by using the target separated image in the second optical state.

The separated image acquisition method of the embodiment is [1] "a separated image acquisition method including: a selection step of selecting desired image separation information from a storage unit that stores a plurality of pieces of image separation information for obtaining a fluorescence separation image obtained by separating a fluorescence image, the image separation information being acquired based on a plurality of reference fluorescence images in a plurality of optical states having different wavelength characteristics; an irradiation step of irradiating a sample with each of excitation light beams of a plurality of wavelengths; an acquisition step of acquiring, for each of a plurality of types of fluorescence generated from the sample by each of the excitation light beams of the plurality of wavelengths, a target fluorescence image in at least one optical state among the plurality of optical states through a fluorescence filter unit having a plurality of reflection wavelength ranges and a plurality of transmission wavelength ranges; and a generation step of generating, for each of the plurality of types of fluorescence, the fluorescence separation image based on the target fluorescence image acquired in the acquisition step and the image separation information selected in the selection step".

The separated image acquisition method of the embodiment may be [2] "the separated image acquisition method according to [1], in which the image separation information is stored in association with an image acquisition condition when the plurality of reference fluorescence images are acquired, and in the selection step, the image separation information associated with an image acquisition condition corresponding to an image acquisition condition at the time of acquiring the target fluorescence image is selected".

The separated image acquisition method of the embodiment may be [3] "the separated image acquisition method according to [1] or [2], in which in the generation step, corrected image separation information that is image separation information corrected based on the target fluorescence image and the selected image separation information is acquired".

The separated image acquisition method of the embodiment may be [4] "the separated image acquisition method according to [3], in which in the generation step, the fluorescence separation image is generated by using the corrected image separation information and the target fluorescence image".

The separated image acquisition method of the embodiment may be [5] "the separated image acquisition method according to [1] or [2], in which in the generation step, the fluorescence separation image is corrected based on the target fluorescence image and the image separation information".

The separated image acquisition method of the embodiment may be [6] "the separated image acquisition method according to [1] or [2], in which in the generation step, the fluorescence separation image generated based on the target fluorescence image and the image separation information is input to a learned inference model, and an output of the learned inference model is obtained as a corrected fluorescence separation image".

The separated image acquisition method of the embodiment may be [7] "the separated image acquisition method according to [1] or [2], in which in the generation step, the target fluorescence image and the image separation information are input to a learned inference model, and an output of the learned inference model is obtained as a corrected fluorescence separation image".

The separated image acquisition method of the embodiment may be [8] "the separated image acquisition method according to any one of [1] to [7], in which the plurality of optical states include at least a first optical state in which the fluorescence is transmitted through an optical filter and a second optical state in which the fluorescence is not transmitted through the optical filter".

The separated image acquisition method of the embodiment may be [9] "the separated image acquisition method according to [8], in which in the generation step, a fluorescence separation image is generated based on the image separation information and the target fluorescence image acquired in the second optical state".

A separated image acquisition device of the embodiment is [10] "a separated image acquisition device including: a storage unit configured to store image separation information for obtaining a fluorescence separation image obtained by separating a fluorescence image, the image separation information being acquired based on a plurality of reference fluorescence images in a plurality of optical states having different wavelength characteristics; an irradiation device configured to irradiate a sample with each of excitation light beams of a plurality of wavelength distributions; an image acquisition device configured to acquire, for each of a plurality of types of fluorescence generated from the sample by each of the excitation light beams of a plurality of wavelengths, a target fluorescence image in at least one optical state among the plurality of optical states through a fluorescence filter unit having a plurality of reflection wavelength ranges and a plurality of transmission wavelength ranges; and an image processing device configured to process a fluorescence image, in which the image processing device selects desired image separation information from among a plurality of pieces of the image separation information stored in the storage unit, and generates, for each of the plurality of types of fluorescence, the fluorescence separation image based on the target fluorescence image acquired in the image acquisition device and the selected image separation information".

The separated image acquisition device of the embodiment may be [11] "the separated image acquisition device according to [10], in which the storage unit stores the image separation information in association with an image acquisition condition when the plurality of reference fluorescence images are acquired, and the image processing device selects the image separation information associated with an image acquisition condition corresponding to an image acquisition condition at the time of acquiring the target fluorescence image".

The separated image acquisition device of the embodiment may be [12] "the separated image acquisition device according to [10] or [11], in which in the generation of the fluorescence separation image, the image processing device acquires corrected image separation information that is image separation information corrected based on the target fluorescence image and the selected image separation information".

The separated image acquisition device of the embodiment may be [13] "the separated image acquisition device according to [12], in which in the generation of the fluorescence separation image, the image processing device generates the fluorescence separation image by using the corrected image separation information and the target fluorescence image".

The separated image acquisition device of the embodiment may be [14] "the separated image acquisition device according to [10] or [11], in which in the generation of the fluorescence separation image, the image processing device corrects the fluorescence separation image based on the target fluorescence image and the image separation information".

The separated image acquisition device of the embodiment may be [15] "the separated image acquisition device according to [10] or [11], in which in the generation of the fluorescence separation image, the image processing device inputs the fluorescence separation image generated based on the target fluorescence image and the image separation information to a learned inference model, and obtains an output of the learned inference model as a corrected fluorescence separation image".

The separated image acquisition device of the embodiment may be [16] "the separated image acquisition device according to [10] or [11], in which in the generation of the fluorescence separation image, the image processing device inputs the target fluorescence image and the image separation information to a learned inference model, and obtains an output of the learned inference model as a corrected fluorescence separation image".

The separated image acquisition device of the embodiment may be [17] "the separated image acquisition device according to any one of [10] to [16], in which the plurality of optical states include at least a first optical state in which the fluorescence is transmitted through an optical filter and a second optical state in which the fluorescence is not transmitted through the optical filter".

The separated image acquisition device of the embodiment may be [18] "the separated image acquisition device according to [17], in which in the generation of the fluorescence separation image, the image processing device generates a fluorescence separation image based on the image separation information and the target fluorescence image acquired in the second optical state".

A separated image acquisition program of the embodiment is [19] "a separated image acquisition program for generating a fluorescence separation image based on a plurality of reference fluorescence images in a plurality of optical states having different wavelength characteristics, acquired through a fluorescence filter unit having a plurality of reflection wavelength ranges and a plurality of transmission wavelength ranges, for each of a plurality of types of fluorescence generated from a sample by each of excitation light beams of a plurality of wavelengths by irradiating the sample with each of the excitation light beams of a plurality of wavelength distributions, the separated image acquisition program causing a computer to execute a process including: storage processing of storing a plurality of pieces of image separation information for obtaining the fluorescence separation images of separated types of fluorescence, the image separation information being acquired based on a plurality of reference fluorescence images; selection processing of selecting desired image separation information from among the plurality of pieces of stored image separation information; and generation processing of generating, for each of the plurality of types of fluorescence, the fluorescence separation image based on a target fluorescence image acquired in at least one optical state among the plurality of optical states and the selected image separation information".

**Reference Signs List**

| | |
|---|---|
| 1 | Fluorescent dye image acquisition system |
| 3 | Image acquisition device |
| 5, 5A | Image processing device |
| 7 | Excitation light source (irradiation device) |
| 9a | Light source-side filter set |
| 9b | Camera-side filter set (fluorescence filter unit) |
| 11 | Dichroic mirror |
| 15 | Camera (image acquisition device) |
| 13 | Wavelength information acquisition optical system (optical filter) |
| 201 | Information search unit (selection unit) |
| 202 | Image acquisition unit |
| 203 | Matrix acquisition unit |
| 204 | Matrix correction unit |
| 204A | Image correction unit |
| 205 | Image generation unit |
| 205A | Image output unit |
| 206 | Image separation information storage unit (storage unit) |
| $C_1, C_2, C_3$ | Fluorescent dye |
| $GC_1$ to $GC_6$ | Fluorescence image |
| $PGr_{01}$ to $PGr_{03}$, $PGr_1$ to $PGr_6$ | Pixel group |
| S | Sample |

**Claims**

1. A separated image acquisition method comprising:

a selection step of selecting desired image separation information from a storage unit that stores a plurality of pieces of image separation information for obtaining a fluorescence separation image obtained by separating a fluorescence image, the image separation information being acquired based on a plurality of reference fluorescence images in a plurality of optical states having different wavelength characteristics;

an irradiation step of irradiating a sample with each of excitation light beams of a plurality of wavelengths;

an acquisition step of acquiring, for each of a plurality of types of fluorescence generated from the sample by each of the excitation light beams of the plurality of wavelengths, a target fluorescence image in at least one optical state among the plurality of optical states through a fluorescence filter unit having a plurality of reflection wavelength ranges and a plurality of transmission wavelength ranges; and
a generation step of generating, for each of the plurality of types of fluorescence, the fluorescence separation image based on the target fluorescence image acquired in the acquisition step and the image separation information selected in the selection step.

2. The separated image acquisition method according to claim 1, wherein

the image separation information is stored in association with an image acquisition condition when the plurality of reference fluorescence images are acquired, and
in the selection step, the image separation information associated with an image acquisition condition corresponding to an image acquisition condition at the time of acquiring the target fluorescence image is selected.

3. The separated image acquisition method according to claim 1 or 2, wherein
in the generation step, corrected image separation information that is image separation information corrected based on the target fluorescence image and the selected image separation information is acquired.

4. The separated image acquisition method according to claim 3, wherein
in the generation step, the fluorescence separation image is generated by using the corrected image separation information and the target fluorescence image.

5. The separated image acquisition method according to claim 1 or 2, wherein
in the generation step, the fluorescence separation image is corrected based on the target fluorescence image and the image separation information.

6. The separated image acquisition method according to claim 1 or 2, wherein
in the generation step, the fluorescence separation image generated based on the target fluorescence image and the image separation information is input to a learned inference model, and an output of the learned inference model is obtained as a corrected fluorescence separation image.

7. The separated image acquisition method according to claim 1 or 2, wherein
in the generation step, the target fluorescence image and the image separation information are input to a learned inference model, and an output of the learned inference model is obtained as a corrected fluorescence separation image.

8. The separated image acquisition method according to any one of claims 1 to 7, wherein
the plurality of optical states include at least a first optical state in which the fluorescence is transmitted through an optical filter and a second optical state in which the fluorescence is not transmitted through the optical filter.

9. The separated image acquisition method according to claim 8, wherein
in the generation step, a fluorescence separation image is generated based on the image separation information and the target fluorescence image acquired in the second optical state.

10. A separated image acquisition device comprising:

a storage unit configured to store image separation information for obtaining a fluorescence separation image obtained by separating a fluorescence image, the image separation information being acquired based on a plurality of reference fluorescence images in a plurality of optical states having different wavelength characteristics;
an irradiation device configured to irradiate a sample with each of excitation light beams of a plurality of wavelength distributions;
an image acquisition device configured to acquire, for each of a plurality of types of fluorescence generated from the sample by each of the excitation light beams of a plurality of wavelengths, a target fluorescence image in at least one optical state among the plurality of optical states through a fluorescence filter unit having a plurality of reflection wavelength ranges and a plurality of transmission wavelength ranges; and
an image processing device configured to process a fluorescence image, wherein
the image processing device
selects desired image separation information from among a plurality of pieces of the image separation information stored in the storage unit, and

generates, for each of the plurality of types of fluorescence, the fluorescence separation image based on the target fluorescence image acquired in the image acquisition device and the selected image separation information.

11. The separated image acquisition device according to claim 10, wherein

the storage unit stores the image separation information in association with an image acquisition condition when the plurality of reference fluorescence images are acquired, and
the image processing device selects the image separation information associated with an image acquisition condition corresponding to an image acquisition condition at the time of acquiring the target fluorescence image.

12. The separated image acquisition device according to claim 10 or 11, wherein
in the generation of the fluorescence separation image, the image processing device acquires corrected image separation information that is image separation information corrected based on the target fluorescence image and the selected image separation information.

13. The separated image acquisition device according to claim 12, wherein
in the generation of the fluorescence separation image, the image processing device generates the fluorescence separation image by using the corrected image separation information and the target fluorescence image.

14. The separated image acquisition device according to claim 10 or 11, wherein
in the generation of the fluorescence separation image, the image processing device corrects the fluorescence separation image based on the target fluorescence image and the image separation information.

15. The separated image acquisition device according to claim 10 or 11, wherein
in the generation of the fluorescence separation image, the image processing device inputs the fluorescence separation image generated based on the target fluorescence image and the image separation information to a learned inference model, and obtains an output of the learned inference model as a corrected fluorescence separation image.

16. The separated image acquisition device according to claim 10 or 11, wherein
in the generation of the fluorescence separation image, the image processing device inputs the target fluorescence image and the image separation information to a learned inference model, and obtains an output of the learned inference model as a corrected fluorescence separation image.

17. The separated image acquisition device according to any one of claims 10 to 16, wherein
the plurality of optical states include at least a first optical state in which the fluorescence is transmitted through an optical filter and a second optical state in which the fluorescence is not transmitted through the optical filter.

18. The separated image acquisition device according to claim 17, wherein
in the generation of the fluorescence separation image, the image processing device generates a fluorescence separation image based on the image separation information and the target fluorescence image acquired in the second optical state.

19. A separated image acquisition program for generating a fluorescence separation image based on a plurality of reference fluorescence images in a plurality of optical states having different wavelength characteristics, acquired through a fluorescence filter unit having a plurality of reflection wavelength ranges and a plurality of transmission wavelength ranges, for each of a plurality of types of fluorescence generated from a sample by each of excitation light beams of a plurality of wavelengths by irradiating the sample with each of the excitation light beams of a plurality of wavelength distributions, the separated image acquisition program causing a computer to execute a process comprising:

storage processing of storing a plurality of pieces of image separation information for obtaining the fluorescence separation images of separated types of fluorescence, the image separation information being acquired based on a plurality of reference fluorescence images;
selection processing of selecting desired image separation information from among the plurality of pieces of stored image separation information; and
generation processing of generating, for each of the plurality of types of fluorescence, the fluorescence separation image based on a target fluorescence image acquired in at least one optical state among the plurality of optical states and the selected image separation information.

*Fig.1*

IMAGE ACQUISITION
DEVICE

IMAGE PROCESSING
DEVICE

# Fig.2

*Fig.3*

5

101
CPU

104
COMMUNICATION MODULE

102
RAM

106
INPUT/OUTPUT MODULE

103
ROM

*Fig.4*

5

201
INFORMATION
SEARCH UNIT

202
IMAGE
ACQUISITION UNIT

203
MATRIX
ACQUISITION UNIT

204
MATRIX
CORRECTION UNIT

205
IMAGE
GENERATION UNIT

206
IMAGE SEPARATION
INFORMATION
STORAGE UNIT

IMAGE PROCESSING DEVICE

## Fig.5

*Fig.6*

# Fig.7

## *Fig.8*

PGr2  PGr3

PGr1

PGr4

PGr5

PGr6

GC1~GC6

PGr01

PGr02

PGr03

GC1~GC6

Fig.9

# Fig.10

```
                    ┌─────────────┐
                    │    START    │
                    └─────────────┘
                           │
        ┌──────────────────────────────────────┐
        │      SEARCH MIXING MATRIX            │──S1
        └──────────────────────────────────────┘
                           │
                          S2
                    ◇─────────────◇        YES
                   ╱  IS THERE MIXING ╲──────────────────┐
                   ╲    MATRIX ?     ╱                    │
                    ◇─────────────◇                       │
                       │ NO    S3                         │ S7
        ┌──────────────────────────────┐   ┌──────────────────────────────┐
        │   ACQUIRE FIRST REFERENCE    │   │      ACQUIRE TARGET          │
        │   FLUORESCENCE IMAGE         │   │   FLUORESCENCE IMAGE         │
        │   AND SECOND REFERENCE       │   │                              │
        │   FLUORESCENCE IMAGE         │   └──────────────────────────────┘
        └──────────────────────────────┘                │ S8
                       │ S4                  ┌──────────────────────────────┐
        ┌──────────────────────────────┐   │   EXTRACT MIXING MATRIX A0   │
        │   ACQUIRE MIXING MATRIX A    │   └──────────────────────────────┘
        └──────────────────────────────┘                │ S9
                       │ S5                  ┌──────────────────────────────┐
        ┌──────────────────────────────┐   │  CORRECT MIXING MATRIX A2    │
        │   STORE MIXING MATRIX A      │   └──────────────────────────────┘
        └──────────────────────────────┘                │ S10
                       │ S6                  ┌──────────────────────────────┐
        ┌──────────────────────────────┐   │  ACQUIRE FLUORESCENT         │
        │  ACQUIRE FLUORESCENT         │   │  DYE MATRIX DATA X           │
        │  DYE MATRIX DATA X           │   └──────────────────────────────┘
        └──────────────────────────────┘                │
                       │◄───────────────────────────────┘
        ┌──────────────────────────────┐
        │   OUTPUT FLUORESCENT         │──S11
        │   DYE IMAGES                 │
        └──────────────────────────────┘
                       │
                ┌─────────────┐
                │     END     │
                └─────────────┘
```

*Fig.11*

Fig.12

# *Fig.13*

5A

```
                    ┌─ 201
          ┌─────────────────────┐
───────→  │     INFORMATION     │ ←──────────┐
          │     SEARCH UNIT     │            │
          └─────────────────────┘            │
                    │                        │
                    ↓     ┌─ 202             │        206
          ┌─────────────────────┐            │    ┌──────────────────┐
───────→  │       IMAGE         │ ──────────────→ │ IMAGE SEPARATION │
          │  ACQUISITION UNIT   │            │    │   INFORMATION    │
          └─────────────────────┘            │    │  STORAGE UNIT    │
                    │                        │    └──────────────────┘
                    ↓     ┌─ 203             │
          ┌─────────────────────┐            │
          │       MATRIX        │ ───────────┘
          │  ACQUISITION UNIT   │
          └─────────────────────┘
                    │
                    ↓     ┌─ 204A
          ┌─────────────────────┐
          │       IMAGE         │
          │  CORRECTION UNIT    │
          └─────────────────────┘
                    │
                    ↓     ┌─ 205A
          ┌─────────────────────┐
          │  IMAGE OUTPUT UNIT  │ ─────────────────────────────────→
          └─────────────────────┘

             IMAGE PROCESSING DEVICE
```

## INTERNATIONAL SEARCH REPORT

| International application No. |
| --- |
| **PCT/JP2023/046652** |

| A. | CLASSIFICATION OF SUBJECT MATTER |
| --- | --- |

*G01N 21/64*(2006.01)i; *G06T 7/00*(2017.01)i; *G06T 7/174*(2017.01)i
FI:   G01N21/64 Z; G06T7/00 350B; G06T7/00 612; G06T7/174

According to International Patent Classification (IPC) or to both national classification and IPC

| B. | FIELDS SEARCHED |
| --- | --- |

Minimum documentation searched (classification system followed by classification symbols)

G01N21/00-21/83; G01N15/00-15/1492; G06T7/00-7/90; G01N33/48-33/98

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2008-541179 A (OLYMPUS SOFT IMAGING SOLUTIONS GMBH) 20 November 2008 (2008-11-20) | 1-19 |
| A | WO 2005/036143 A1 (HAMAMATSU PHOTONICS K.K.) 21 April 2005 (2005-04-21) | 1-19 |
| A | US 2021/0208076 A1 (KOREA ADVANCED INSTITUTE OF SCIENCE AND TECHNOLOGY) 08 July 2021 (2021-07-08) | 1-19 |
| A | MACRE, Tristan D. et al., Robust blind spectral unmixing for fluorescence microscopy using unsupervised learning, Plos One, 02 December 2019, 1-24 | 1-19 |
| P, A | WO 2023/026742 A1 (HAMAMATSU PHOTONICS K.K.) 02 March 2023 (2023-03-02) | 1-19 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **13 February 2024** | **27 February 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| JP | 2008-541179 | A | 20 November 2008 | US | 2009/0103801 | A1 | |
| | | | | GB | 2439025 | A | |
| | | | | WO | 2006/122810 | A1 | |
| | | | | DE | 102005022880 | A1 | |
| WO | 2005/036143 | A1 | 21 April 2005 | US | 2007/0121099 | A1 | |
| | | | | EP | 1677097 | A1 | |
| US | 2021/0208076 | A1 | 08 July 2021 | KR | 10-2021-0087869 | A | |
| WO | 2023/026742 | A1 | 02 March 2023 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BINJIE QIN et al.** Target/Background Classification Regularized Nonnegative Matrix Factorization for Fluorescence Unmixing. *IEEE TRANSACTIONS ON INSTRUMENTATION AND MEASUREMENT*, April 2016, vol. 65 (4)

- **TRISTAN D. MCRAE et al.** Robust blind spectral unmixing for fluorescence microscopy using unsupervised learning. *PLOS ONE*, 02 December 2019